# EUROPEAN PATENT APPLICATION

(11) **EP 4 468 433 A1**
(43) Date of publication of application: **27.11.2024**
(21) Application number: 24754870.4
(22) Date of filing: 01.03.2024
(51) Int. Cl.: H01M 10/04

(54) **FULL-TAB BATTERY**

(30) Priority: 08.03.2023 CN 202320436250 U
(71) Applicant: Eve Energy Co., Ltd., Huizhou, Guangdong 516006 (CN)
(72) Inventor: XIN, Hao, Huizhou, Guangdong 516006 (CN); LIU, Shengqi, Huizhou, Guangdong 516006 (CN); SONG, Pengyuan, Huizhou, Guangdong 516006 (CN)
(74) Representative: Murgitroyd & Company
(86) International application number: PCT/CN2024/079574
(87) International publication number: WO 2024/183632

(57) **Abstract**

The present disclosure provide a full-tab battery including a coating area and an uncoated area connected with each other; and the uncoated area includes a tab area. In the horizontal direction, the width of the coating area is greater than that of the tab area, the tab area is is separated from a left side edge of the coating area by a first distance, and the tab area is is separated from a right side edge of the coating area by a second distance.

## Description

The present disclosure claims priority to Chinese Patent Application No. 202320436250.4, filed on March 8, 2023, the disclosure of which is incorporated herein by reference in its entirety.

### TECHNICAL FIELD

The present disclosure relates to the field of energy storage batteries, and in particular, to a full-tab battery.

### BACKGROUND

During the charging and discharging process of the battery, current is collected through an aluminum foil and a copper foil, and is led out to an external circuit through tabs. In a conventional cylindrical battery, positive and negative electrodes are coated by gap coating, a lead-out wire-tab is welded at gaps of a material region, and then the positive and negative electrodes and a separator are stacked and wound. In this way, a current path first passes through the aluminum foil and the copper foil to collect current laterally to the tabs, and then conducts longitudinally to the external circuit through the tabs. Due to the existence of physical resistance of metal materials, significant ohmic heat is generated through a long electronic path during charging and discharging, causing the battery temperature to rise and creating safety hazards.

### SUMMARY OF INVENTION

Embodiments of the present disclosure provides a full-tab battery, which can solve the technical problems of low charging and discharging efficiency and safety hazards caused by high temperature in the related art.

The present disclosure provides a full-tab battery. The full-tab battery includes a coating area and an uncoated area, the coating area is connected with the uncoated area; and the uncoated area includes a tab area.

In a horizontal direction, a width of the coating area is greater than a width of the tab area, the tab area is separated from a left side edge of the coating area by a first distance, and the tab area is separated from a right side edge of the coating area by a second distance; a ratio of the first distance and a height of the tab area in the vertical direction satisfy a first dimensional relationship, and a ratio of the second distance and a height of the tab area in the vertical direction satisfy a second dimensional relationship.

The tab area is provided with a plurality of sub-tabs, and the plurality of sub-tab are disposed in an array in the tab area.

### ADVANTAGEOUS EFFECTS

Advantageous effects of the present disclosure are as follows: the present disclosure provides a full-tab battery including a coating area and an uncoated area, wherein the coating area is connected with the uncoated area. The uncoated area includes a tab area. In a horizontal direction, a width of the coating area is greater than a width of the tab area, the tab area is separated from a left side edge of the coating area by a first distance, and the tab area is separated from a right side edge of the coating area by a second distance; a ratio of the first distance and a height of the tab area in the vertical direction satisfy a first dimensional relationship, and a ratio of the second distance and a height of the tab area in the vertical direction satisfy a second dimensional relationship. According to the full-tab battery provided in the present disclosure, the conductive path of the battery is no longer dependent on a single tab, and the current is transmitted simultaneously along a plurality of tabs instead of along a single tab. As a result, on the one hand, the conductive distance of the current is shortened, the internal resistance of the battery is effectively reduced, and the charging and discharging efficiency of the battery is improved. On the other hand, the area of current conduction is increased, the loss is reduced, the heat dissipation of the battery is improved, and the safety is improved.

### DESCRIPTION OF THE DRAWINGS

FIG. 1 is a schematic structural diagram of a full-tab battery according to embodiments of the present disclosure.
FIG. 2 is an enlarged view of an uncoated area according to embodiments of the present disclosure.
FIG. 3 is a schematic diagram of another full-tab battery according to embodiments of the present disclosure.

### List of reference numbers:

1. a full-tab battery; 10. a coating area; 20. an uncoated area ; 30. a tab area; 301. a sub-tab; 40. an insulating area.

### EMBODIMENTS OF INVENTION

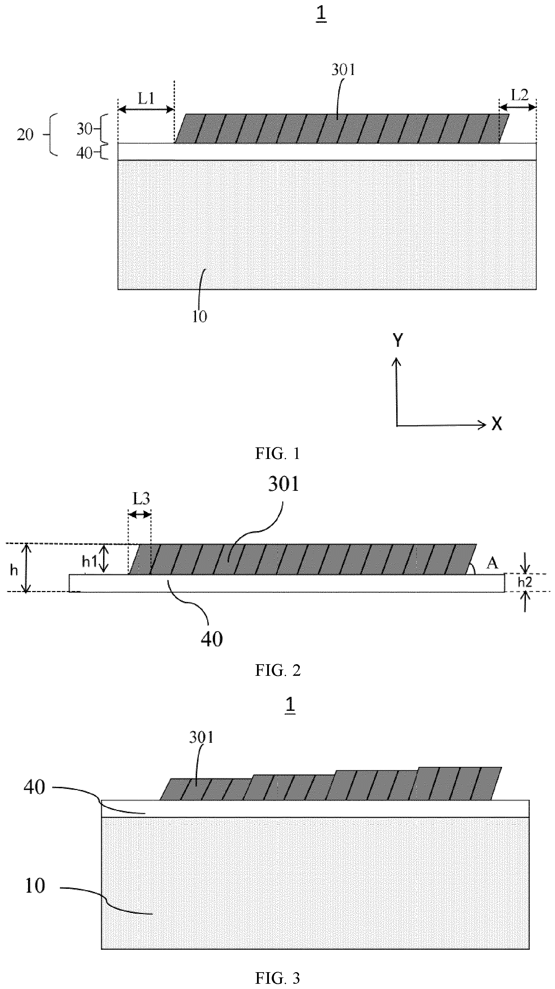

As shown in FIG. 1, which is a schematic structural diagram of a full-tab battery according to embodiments of the present disclosure. In FIG. 1, the full-tab battery 1 may include a coating area 10 and an uncoated area 20, and the coating area 10 is connected with the uncoated area 20. The uncoated area 20 further includes a tab area 30. A cylindrical battery including the tabs can be obtained by winding FIG. 1 in a certain direction.

Referring to FIG. 1, in an actual full-tab battery 1, electrodes are actually coated to produce a coating area 10 and an uncoated area 20. The coating area 10 is an area where positive and negative electrode active materials are coated in the electrodes, and the uncoated area 20 is an area where the positive and negative electrode active materials are not coated. Therefore, the coating area 10 and the uncoated area 20 are essentially two different areas on the same electrode instead of two separate areas that is connected. This arrangement can effectively improves the connection strength between the coating area 10 and the uncoated area 20, and avoid the occurrence of shedding between the coating area 10 and the uncoated area 20. Since the battery usually needs to include tabs connected with other external units, the tabs are provided in the uncoated area 20 of the full-tab battery 1, i.e., the uncoated area 20 may also include the tabs 30.

For the embodiment shown in FIG. 1, in a horizontal direction, the width of the coating area 10 is greater than a width of the tab area 30, the tab area 30 is separated from a left side edge of the coating area 10 by a first distance L1, and the tab area 30 is separated from a right side edge of the coating area 10 by a second distance L2. That is, the uncoated area 20 is disposed in the middle of the coating area 10 and is separated from the left and right sides of the coating area 10 by a certain distance. With this arrangement, tabs are prepared in almost the entire uncoated area 20, resulting in a full-tab battery 1. Further, a plurality of tabs are provided in the tab area 30. In this way, the conductive path is prevented from depending on a single tab in the original battery, and current is transmitted longitudinally along a plurality of sub-tabs 301 in the entire tab area 30 instead of being transmitted along a single tab, thereby shortening the current conduction distance and increasing the current conduction area.

For the full-tab battery 1 provided in the embodiments of the present disclosure, the ratio of the first distance L1 and the height h1 of the tab area 30 in the vertical direction satisfy a first dimensional relationship; and the ratio of the second distance L2 and the height hl of the tab area 30 in the vertical direction satisfy a second dimensional relationship. For the embodiment shown in FIG. 1, the uncoated area 20 further includes an insulating area 40 disposed between the coating area 10 and the tab area 30. In general, the uncoated area includes an insulating area 40 and a tab area 30, wherein the insulating area 40 is directly connected with the coating area 10, and the coating area 10 and the tab area 30 is separated by the insulating area 40.

It should be noted that the above-mentioned vertical direction is X direction as shown in FIG. 1, and the horizontal direction is Y direction as shown in FIG. 1.

In the embodiments of the present disclosure, the height h of the entire uncoated area 20 in the vertical direction is usually in the range of 3 mm to 20 mm. The ratio of the height h2 of the insulating area 40 in the vertical direction to the height h1 of the tab area 30 in the vertical direction may be 1:1, 2:1, or 7:2; and the specific ratios can be set according to actual needs.

As shown in FIG. 2, which is an enlarged view of an uncoated area according to embodiments of the present disclosure. The uncoated area 20 in FIG. 2 includes an insulating area 40 and a tab area 30, wherein the tab area 30 is mainly used to set the tabs of the battery. In FIG. 2, the tab area includes a plurality of sub-tabs 301 disposed in an array in the tab area 30; alternatively, a plurality of sub-tabs 301 distributed in an array over the insulating area 40. It should be noted that the plurality of sub-tabs 301 are usually disposed in only one row, but not in a plurality of rows.

Referring to FIG. 2, the shapes of the plurality of sub-tabs 301 in FIG. 2 are generally the same, that is, the plurality of identical sub-tabs 301 are disposed in an array in the tab area 30. The height h1 of the tab area 30 in the vertical direction may be the height of the sub-tabs 301 in the vertical direction. Therefore, the ratio of the above-mentioned first distance L1 and the height h1 of the tab area 30 in the vertical direction satisfy the first dimensional relationship, which essentially means that the ratio of the first distance L1 and the height h1 of the sub-tabs 301 in the vertical direction satisfy the first dimensional relationship. Similarly, the ratio of the second distance L2 and the height h1 of the tab area 30 in the vertical direction satisfy a second dimensional relationship, which essentially means that the ratio of the second distance L2 and the height h1 of the sub-tabs 301 in the vertical direction satisfy a second dimensional relationship.

In a specific embodiment, the first distance L1 and the height h1 of the tab area 30 in the vertical direction (i.e., the height of the sub-tabs 301 in the vertical direction) satisfy (80 to 100): 1, that is, the first distance L1 is 80 to 100 times the height h1 of the tab area 30 in the vertical direction. Further, the second distance L2 and the height h1 of the tab area 30 in the vertical direction satisfy (50 to 60): 1; that is, the second distance L2 is 50 to 60 times the height h1 of the tab area 30 in the vertical direction. The first distance L1 and the second distance L2 in the present disclosure are not equal and are generally related to the shape and size of the tab.

In the present disclosure, each of the plurality of sub-tabs 301 may have a parallelogram structure; however, each of the plurality of sub-tabs 301 is not in a rectangular or square structure. Meanwhile, in the embodiments of the present disclosure, the angle between one side of any of the plurality of sub-tabs 301 and the horizontal direction is in the range of 45 degrees to 80 degrees. Referring to FIG. 2, ZA in FIG. 2 is the angle between one side of the sub-tab 301 and the horizontal direction, and LA range from 45 degrees to 80 degrees. Therefore, the sub-tabs 301 cannot be in a rectangular or square structure. In the present disclosure, a direction corresponding to a small angle in the sub-tabs 301 is a direction of the above-mentioned second distance L2. As shown in FIG. 1, the distance between the rightmost tab and the rightmost edge of the coating area is the second distance L2, which is also the opening orientation of a small angle formed between the rightmost tab and the horizontal direction. In embodiments of the present disclosure, the first distance L1 is usually greater than the second distance L2.

In some embodiments, the width L3 of a single sub-tab 301 in the horizontal direction is the same as the height h1 of the sub-tab 301 in the vertical direction; that is, the ratio of the width to the height of a single sub-tab 301 is 1:1. For the entire electrode, the ratio of the width L3 of a single sub-tab 301 in the horizontal direction and the width of the coating area 10 in the horizontal direction satisfy a third dimensional relationship. In a specific embodiment, the ratio of the width L3 of a single sub-tab 301 in the horizontal direction and the width of the coating area 10 in the horizontal direction satisfy 1:( 300 to 500); that is, the width of the coating area 10 in the horizontal direction is 300 to 500 times the width L3 of a single sub-tab 301 in the horizontal direction.

As shown in FIG. 3, which is a schematic diagram of another full-tab battery according to embodiments of the present disclosure. In FIG. 3, the uncoated area 20 also includes an insulating area 40 and a tab area 30, and the tab area 30 also includes a plurality of sub-tabs 301. However, FIG. 3 differs from FIG. 2 in that the plurality of sub-tabs 301 in FIG. 2 are the same in shape, while the plurality of sub-tabs 301 in FIG. 3 are different in shape.

For FIG. 3, the heights of the plurality of sub-tabs 301 in the vertical direction are different. Specifically, the heights of the plurality of sub-tabs 301 in the vertical direction may be increased in a direction from left to right or from right to left. In other words, the heights of the plurality of sub-tabs 301 show a stepped shape. The reason for this arrangement is that when the cylindrical battery is prepared by winding electrodes, the plurality of sub-tabs 301 need to be actually bent and overlapped, and meanwhile, they need to be welded to the center of the cylindrical battery to form tabs that can be connected to the outside. As the bending process proceeds, the distance between a part of the sub-tabs 301 and the center of the cylindrical battery becomes larger, so that the height of the sub-tab 301 needs to be increased in order to ensure that the tabs can be welded normally.

As shown in FIG. 3, the heights of the plurality of sub-tabs 301 in the vertical direction increase sequentially from left to right. The winding may be performed in a direction from left to right to form a cylindrical battery. During the winding process, the sub-tabs 301 on the right side of the eletrodes are located outside of the cylindrical battery, and the sub-tabs 301 on the left side of the eletrodes are located inside of the cylindrical battery. Therefore, it is necessary to increase the height of the right sub-tab 301 so as to ensure that the length of the right sub-tab 301 after winding can still reach the center of the cylindrical battery.

## Claims

1. A full-tab battery (1) comprising a coating area (10) and an uncoated area (20), the coating area (10) being connected with the uncoated area (20), and the uncoated area (20) comprising a tab area (30);
in a horizontal direction, a width of the coating area (10) is greater than a width of the tab area (30), and the tab area (30) is separated from a left side edge of the coating area (10) by a first distance L1, and the tab area (30) is separated from a right side edge of the coating area (10) by a second distance L2;
a ratio of the first distance L1 and a height h1 of the tab area in the vertical direction satisfy a first dimensional relationship, and the second distance L2 and a ratio of the height h1 of the tab area in the vertical direction satisfy a second dimensional relationship; and
the tab area (30) is provided with a plurality of sub-tabs (301), and the plurality of sub-tabs (301) being disposed in an array in the tab area (30).

2. The full-tab battery (1) according to claim 1, wherein the uncoated area (20) further comprises an insulating area (40) disposed between the coating area (10) and the tab area (30), the height h1 of the tab area (30) in the vertical direction is less than a height h of the uncoated area (20) in the vertical direction.

3. The full-tab battery (1) according to claim 1, wherein the height h of the uncoated area (20) ranges from 3 mm to 20 mm.

4. The full-tab battery (1) according to claim 1, wherein in the horizontal direction, a ratio of a width of each of the plurality of sub-tabs (301) and the width of the coating area (10) satisfy a third dimensional relationship.

5. The full-tab battery (1) according to claim 4, wherein in the horizontal direction, the ratio of the width of each of the plurality of sub-tabs (301) and the width of the coating area (10) satisfy 1: (300 to 500).

6. The full-tab battery (1) according to claim 1, wherein each of the plurality of sub-tabs (301) has a parallelogram structure; or the tab area (30) composed of the plurality of sub-tabs (301) is in a parallelogram structure, and each of the plurality of sub-tabs (301) is not in a rectangular or square structure.

7. The full-tab battery (1) according to claim 6, wherein each of the plurality of sub-tabs (301) is in a parallelogram structure with same size.

8. The full-tab battery (1) according to claim 6, wherein the width of each of the plurality of sub-tabs (301) in a horizontal direction is same as a height of each of the plurality of sub-tabs (301) in a vertical direction.

9. The full-tab battery (1) according to claim 7, wherein an angle formed between an edge of each of the plurality of sub-tabs (301) and a horizontal line ranges from 45 degrees to 80 degrees.

10. The full-tab battery (1) according to claim 1, wherein a height of each of the plurality of sub-tabs (301) in a vertical direction is different.

11. The full-tab battery (1) according to claim 1, wherein the ratio of the first distance L1 and the height h1 of the tab area (30) in the vertical direction satisfy (80 to 100): 1; and/or, the ratio of the second distance L2 and the height h1 of the tab area (30) in the vertical direction satisfy (50 to 60):1.
